# EUROPEAN PATENT APPLICATION

(11) **EP 4 826 066 A1**
(43) Date of publication of application: **21.10.2026**
(21) Application number: 24904433.0
(22) Date of filing: 13.12.2024
(51) Int. Cl.: C22C 38/18, C22C 38/06, C22C 38/00, C21D 8/02, C23C 2/06, C23C 2/28

(54) **COLD ROLLED STEEL SHEET AND METHOD OF MANUFACTURING SAME**

(30) Priority: 15.12.2023 KR 20230183870
(71) Applicant: POSCO Co., Ltd, Gyeongsangbuk-do 37859 (KR)
(72) Inventor: HA, Yu-Mi, Gwangyang-si, Jeollanam-do 57807 (KR); PARK, Man-Young, Gwangyang-si, Jeollanam-do 57807 (KR); HAN, Seong-Ho, Gwangyang-si, Jeollanam-do 57807 (KR)
(74) Representative: Meissner Bolte Partnerschaft mbB
(86) International application number: PCT/KR2024/096932
(87) International publication number: WO 2025/127868

(57) **Abstract**

The purpose of one aspect of the present invention is to provide a cold rolled steel sheet and a method of manufacturing same. The purpose of a preferred aspect of the present invention is to provide a cold rolled steel sheet having excellent low-temperature tempering hardness and room-temperature aging resistance, and a method of manufacturing same.

## Description

### Technical Field

The present disclosure relates to a cold rolled steel sheet and a method of manufacturing the same.

### Background Art

Recently, for the purpose of lightening to improve automotive fuel efficiency, there has been a continuous demand for reducing the thickness of steel sheets the high-strengthening of steel sheets. Bake hardenable (BH) steel is known as the most suitable steel material for outer panels due to these characteristics. A bake-hardening phenomenon refers to a phenomenon in which solute carbon and solute nitrogen, activated during paint baking, adhere to dislocations generated during pressing, thereby increasing yield strength. Steel with excellent bake-hardenability facilitates forming before paint baking, and dent resistance may be improved in a final product, thereby simultaneously securing of excellent formability and strength.

However, due to the solute elements within the steel, BH steel is susceptible to aging degradation, such as yield point elongation, when maintained at room temperature for an extended period, and therefore, it is required to have room-temperature anti-aging properties to guarantee aging over a certain period.

Generally, cold-rolled steel sheets with bake-hardenability are known to achieve a bake-hardening amount of approximately 40 to 50 MPa by applying low-temperature coiling at 400 to 500°C and a batch annealing method to low-carbon, phosphorus-added Al-killed steel. This is because batch annealing makes it easier to achieve a balance between formability and bake-hardenability. In the case of phosphorus-added Al-killed steel produced by a continuous annealing method, securing bake-hardenability is relatively easy due to the use of a relatively fast cooling rate; however, there is a problem in which formability deteriorates due to rapid heating and short-term annealing, and thus, its application has been limited to automotive outer panels in which high workability is not required.

Recently, thanks to the rapid advancements in steelmaking technology, it has become possible to control the appropriate amount of solute elements in the steel, and, as Al-killed steel sheets containing strong carbonitride-forming elements, such as Ti or Nb, have become available, it has become possible to manufacture bake-hardenable cold-rolled steel sheets with excellent formability. The use of such cold-rolled steel sheets for automotive outer panels requiring dent resistance is on a continuous upward trend.

Generally, automotive bake-hardening process is carried out at 170°C, and until now, steel sheets capable of securing bake hardening values (BH values) at this temperature have been manufactured.

However, recently, some automakers have been considering lowering the bake-hardening temperature after painting as a measure to reduce costs and CO₂ emissions. In particular, there has been a growing trend among automakers to use non-ferrous lightweight materials, such as aluminum or plastic (or CFRP), instead of steel for outer panels to achieve vehicle weight reduction. Up to now, steel and non-ferrous materials are press-processed separately, painted, and bake-processed, and then parts of the two materials are assembled at the final stage. However, for the purposes of improving production process efficiency, reducing energy costs, and protecting the environment, there is a continuing increase in attempts to press-process steel and non-ferrous materials, assemble them, and bake-process them at the same temperature. Such low-temperature baking results in a sharp drop in the bake hardening value (BH value) typically obtained at 170°C, leading to a problem in which adequate dent resistance, which is the purpose of adopting bake-hardened steel, cannot be secured.

Generally, lowering the bake-hardening temperature of a steel sheet delays the pinning amount of solute carbon and solute nitrogen and time required for pinning, thereby reducing bake hardenability. Regarding the bake hardening phenomenon, it is common practice to apply a pre-strain of several percent and perform a heat treatment at 170°C for 20 minutes after painting, and a hardening amount of at least 30 MPa is required. Therefore, to lower the bake hardening temperature while securing an appropriate level of bake-hardenability, it is necessary to maximally secure bake-hardenability at higher temperatures. However, if the bake-hardenability of the steel sheet increases beyond a certain level, the anti-aging property conversely deteriorates, increasing the likelihood of surface defects during part processing. Therefore, the most desirable approach is to control the difference between the amount of bake hardening obtained from a heat treatment at 170°C, which is a conventional baking process, and the BH value obtained from a low temperature, i.e., a bake heat treatment at 140°C, to be low. However, considering that the solute elements in steel depend exponentially on temperature, it is very difficult to reduce the difference in BH values between the low temperature of 140°C and the high temperature of 170°C.

In other words, to secure appropriate bake hardenability at low temperatures, a manufacturing technology capable of simultaneously achieving superior bake hardenability under conventional conditions of 170°C and corresponding anti-aging properties.

### [Related Art Document]

(Patent Document 1) Japanese Application Publication No. 7-75803
(Patent Document 2) Japanese Application Publication No. 2001-140038

### Summary of Invention

### Technical Problem

An aspect of the present disclosure is to provide a cold-rolled steel sheet and a method of manufacturing the same.

Another aspect of the present disclosure is to provide a cold-rolled steel sheet with excellent low-temperature bake hardenability and room-temperature anti-aging properties, and a method of manufacturing the same.

### Solution to Problem

According to an aspect of the present disclosure, a cold rolled steel sheet includes, by wt%, 0.010 to 0.020% of C, 0.0050 to 0.10% of Si, 0.50 to 1.450% of Mn, 0.30 to 1.50% of Cr, 0.030% or less (excluding 0%) of P, 0.010% or less (excluding 0%) of S, 0.0020 to 0.010% of N, 0.010 to 0.040% of Al, and a remainder of Fe and unavoidable impurities, wherein a microstructure includes columnar ferrite and a remainder of a transformed structure, the transformed structure includes at least one of martensite, bainite, and ferritic bainite, and the transformed structure has an area% of 1.0% or less (excluding 0%) and an average grain size of 1000 nm or less.

The cold-rolled steel sheet may have a tensile strength of 350 MPa or more, a yield strength of 200 to 300 MPa, an elongation of 30% or more, an amount of bake hardening after heat treatment at 140°C for 20 minutes of 30 MPa or more, a difference between the amount of bake hardening after heat treatment at 140°C for 20 minutes and an amount of bake hardening after heat treatment at 170°C for 20 minutes of 20 MPa or less, and a yield point elongation (AI) of 0.2% or less after heat treatment at 100°C for 1 hour.

The cold-rolled steel sheet may have a hot-dip galvanized plating layer or a galvannealed plating layer formed on at least one surface thereof.

According to another aspect of the present disclosure, a method of manufacturing a cold rolled steel sheet includes reheating a slab comprising, by wt%, 0.010 to 0.020% of C, 0.0050 to 0.10% of Si, 0.50 to 1.450% of Mn, 0.30 to 1.50% of Cr, 0.030% or less (excluding 0%) of P, 0.010% or less (excluding 0%) of S, 0.0020 to 0.010% of N, 0.010 to 0.040% of Al, and a remainder of Fe and unavoidable impurities; finishing hot rolling the reheated slab to obtain a hot-rolled steel sheet; cooling the hot-rolled steel sheet to 500 to 700°C and then coiling the hot-rolled steel sheet; pickling the coiled hot-rolled steel sheet and then cold rolling the picked hot-rolled steel sheet to obtain a cold-rolled steel sheet; primarily heating the cold-rolled steel sheet to 760 to 830°C; primarily cooling the primarily heated cold-rolled steel sheet to a cooling stop temperature of 200 to 400°C at an average cooling rate of 20°C/s or more; and secondarily heating the primarily cooled cold-rolled steel sheet to 400 to 600°C at a heating rate of 5°C/s or less.

The slab reheating may be performed at 1100 to 1250°C.

The finishing hot rolling may be performed at 880°C or higher.

The cold rolling may be performed with a reduction ratio of 60 to 90%.

The primary heating may be performed for 30 seconds or more.

The method may further include temper rolling the secondarily heated cold-rolled steel sheet at a reduction ratio of 0.5 to 2% using a skin pass roll having a surface roughness Ra of 1.0 to 2.2 µm.

The method may further include, after the secondary heating, immersing the secondarily heated cold-rolled steel sheet in a zinc plating bath at 440 to 500°C.

The method may further include, after immersion in the zinc plating bath, temper rolling the cold-rolled steel sheet using a skin pass roll having a roughness Ra of 1.0 to 2.2 µm at a reduction ratio of 0.5 to 2%.

The method may further include alloying the cold-rolled steel sheet at 450 to 540°C.

### Advantageous Effects of Invention

According to an aspect of the present disclosure, the cold-rolled steel sheet and the method of manufacturing the same may be provided.

According to an aspect of the present disclosure, the cold-rolled steel sheet with excellent low-temperature bake hardenability and room-temperature anti-aging properties and the method of manufacturing the same may be provided.

### Best Mode for Invention

Hereinafter, a cold-rolled steel sheet according to an embodiment of the present disclosure will be described. First, an alloy composition will be described. Unless otherwise specified, the content of the alloy composition described below refers to wt%.

### C: 0.010 to 0.020%

Carbon (C) is an interstitial solute element effectively contributing to securing the strength of steel. In addition, since it is an important element for securing the fraction of martensite by increasing the hardenability of steel, a certain level or more of C must be added to secure a certain amount of transformed structure as intended by the present disclosure. If the content of C is less than 0.010%, it is difficult to sufficiently obtain the aforementioned effects. If the content of C exceeds 0.020%, the transformed structure is excessively formed, leading to an increase in strength and a decrease in elongation, which increases the likelihood of bending defects occurring on a product surface during part processing by customers. Therefore, it is desirable for the content of C to have a range of 0.010 to 0.020%. The lower limit of the C content is more advantageous at 0.0110%, even more advantageous at 0.0120%, and most advantageous at 0.0130%. The upper limit of the C content is more advantageous at 0.0190%, even more advantageous at 0.0180%, and most advantageous at 0.0170%.

### Si: 0.0050 to 0.10%

Silicon (Si) is an element that generally contributes to the increase in steel strength through solid solution strengthening. If the content of Si is less than 0.0050%, it is difficult to sufficiently obtain the effects described above. However, in the present disclosure, the lower limit of the Si content may be satisfied even without intentionally adding Si. If the content of Si exceeds 0.10%, there is a problem of deteriorating plating surface characteristics. Therefore, it is preferable for the content of Si to have a range of 0.0050% to 0.10%. The lower limit of the Si content is more advantageous at 0.00550%, even more advantageous at 0.0070%, and most advantageous at 0.010%. The upper limit of the Si content is more advantageous at 0.090%, even more advantageous at 0.070%, and most advantageous at 0.050%.

### Mn: 0.50 to 1.450%

Manganese (Mn), as a solid solution strengthening element, may act to contribute not only to an increase in the strength of steel but also to the precipitation of S in the steel as MnS. In the present disclosure, Mn, together with C and Cr, may increase hardenability of the steel, thereby contributing to securing the fraction of a transformed structure desired in the steel of the present disclosure. If the content of Mn is less than 0.50%, it may be difficult to secure an appropriate level of fraction of the transformed structure and, consequently, to ensure low-temperature bake hardenability and room-temperature anti-aging properties. If the content of Mn exceeds 1.450%, the transformed structure may be excessively formed, making it difficult to secure low-temperature bake hardenability. Furthermore, excessive addition of manganese (Mn) may lead to the formation of annealing oxides, causing surface problems in plated products, and may result in a decrease in elongation, leading to inferior processability. Therefore, it is desirable for the content of Mn to be in the range of 0.50 to 1.450%. The lower limit of the Mn content is more at advantageous 0.60%, even more advantageous at 0.70%, and most advantageous at 0.80%. The upper limit of the Mn content is more advantageous at 1.40%, even more advantageous at 1.350%, and most advantageous at 1.30%.

### Cr: 0.30 to 1.50%

Chromium (Cr) is a solid solution strengthening element and is one of the very important elements in the present disclosure, along with C, Mn, and N mentioned above. Cr increases hardenability of steel and effectively contributes to the formation of martensite. In addition, Cr forms coarse Cr-based carbides, such as Cr₂₃C₆ during hot rolling, thereby controlling the amount of solute C in the steel to below an appropriate level and suppressing the occurrence of yield point elongation (YPel), thus enabling the production of composite structure steel with a low yield ratio. In addition, Cr is an element effectively contributing to securing elongation of composite structure steel by minimizing a decrease in elongation relative to an increase in strength. If the content of Cr is less than 0.30%, the hardenability of the steel may decrease, making it difficult to secure the fraction of the transformed structure intended in the present disclosure. This results in a decrease in a BH140 value, and furthermore, the condition that the BH170-BH140 value (a difference between the amount of bake hardening after heat treatment at 170°C for 20 minutes and the amount of bake hardening after heat treatment at 140°C for 20 minutes) is 20 MPa or less cannot be satisfied. If the content of Cr exceeds 1.50%, martensite may be excessively formed to exceed the fraction of the transformed structure presented in the present disclosure, which may lead to a decrease in the BH140 value and a decrease in elongation. Therefore, it is desirable for the content of Cr to have a range of 0.30 to 1.50%. The lower limit of the Cr content is more advantageous at 0.40%, even more advantageous at 0.50%, and most advantageous at 0.60%. The upper limit of the Cr content is more advantageous at 1.40%, even more advantageous at 1.30%, and most advantageous at 1.20%.

### P: 0.030% or less (excluding 0%)

Phosphorus (P) is an element inevitably included as an impurity present in steel. However, even with a very small amount, P is an element effective in securing strength of steel through solid solution strengthening without significantly impairing drawability. On the other hand, if the content of P exceeds 0.030%, the possibility of brittle fracture may increase, which may not only cause plate breakage of a slab during hot rolling but also significantly degrade surface properties of a plated steel sheet. Therefore, it is desirable for the content of P to be in the range of 0.030% or less (excluding 0%). It is more advantageous for the P content to be 0.020% or less, even more advantageous to be 0.010% or less, and most advantageous to be 0.0050% or less. Meanwhile, the present disclosure does not specifically limit the lower limit of the P content, but as an example, it may be 0.0010%.

### S: 0.010% or less (excluding 0%)

Sulfur (S) is an impurity present in steel and is inevitably included; therefore, to ensure excellent welding characteristics, it is desirable to manage the content of S as low as possible. In particular, since S may cause red shortness, it is desirable for the content of S to be in the range of 0.010% or less (excluding 0%). It is more advantageous for the S content to be 0.0080% or less, even more advantageous to be 0.0060% or less, and most advantageous to be 0.0050% or less. Meanwhile, the present disclosure does not specifically limit the lower limit of the S content, but as an example, it may be 0.0010%.

### N: 0.0020 to 0.010%

Nitrogen (N) is an element inevitably included as an impurity present in steel. Therefore, it is generally desirable to manage the content of N as low as possible. However, in the present disclosure, N is a very important element effective in securing low-temperature bake hardenability and room-temperature anti-aging properties even in a very small amount. However, since a diffusion rate of N is very high, N may simultaneously induce bake hardenability and aging degradation. Therefore, in order to suppress aging degradation caused by N, a certain amount of transformed structure fraction must be secured through an appropriate combination of C, Mn, and Cr, and a certain amount of N is required to obtain low-temperature bake hardenability at 100°C in steel containing such a transformed structure. If the content of N is less than 0.0020%, it may be difficult to sufficiently obtain the aforementioned effects. If the content of N exceeds 0.010%, it becomes difficult to simultaneously secure low-temperature bake hardenability and room-temperature anti-aging properties. Therefore, it is preferable that the content of N be in the range of 0.0020% to 0.010%. The lower limit of the N content is more advantageous at 0.0030%, even more advantageous at 0.0040%, and most advantageous at 0.0050%. The upper limit of the N content is more advantageous at 0.0090%, even more advantageous at 0.0080%, and most advantageous at 0.0070%.

### Al: 0.010 to 0.040%

Aluminum (Al) is a component added to steel for grain refinement and deoxidation. In the present disclosure, in order to manufacture Al-killed steel in a stable state, the lower limit of the Al content may be limited to 0.010%. If the content of Al exceeds 0.040%, while strength may increase due to grain refinement, excessive inclusions may be formed during steelmaking/continuous casting operations, which not only degrades the surface quality of the steel sheet but also may lead to an increase in manufacturing costs. Accordingly, it is preferable that the Al content be in the range of 0.010 to 0.040%. The lower limit of the Al content is more advantageous at 0.0150% and even more advantageous at 0.020%. The upper limit of the Al content is more advantageous at 0.0350% and even more advantageous at 0.030%.

The cold-rolled steel sheet of the present disclosure may include a remainder of iron (Fe) and unavoidable impurities in addition to the composition described above. Since unavoidable impurities may be unintentionally incorporated during the conventional manufacturing process, they cannot be excluded. As such impurities are known to any skilled person in the field of conventional steel manufacturing, all details thereof are not specifically mentioned in this specification.

It is preferable that the microstructure of the cold-rolled steel sheet of the present disclosure include columnar ferrite and the remainder transformed structure. At this time, the transformed structure may include at least one of martensite, bainite, and ferritic bainite, and it is preferable that the transformed structure has an area of 1.0% or less (excluding 0%) and an average grain size of 1000 nm or less. The present disclosure utilizes the transformed structure within the microstructure to secure an appropriate level of low-temperature bake hardenability. The aforementioned C, Mn, and Cr are advantageous for forming the transformed structure, and since a very large number of mobile dislocations exist around the transformed structure, the movement of interstitial elements, such as C and N, may be hindered. That is, by appropriately utilizing N and C and the transformed structure, aging may not occur at room temperature, and bake hardenability (BH properties) may be obtained even at low bake temperatures. If the transformed structure is not present, sufficient mobile dislocations cannot be obtained, and a BH140 value cannot satisfy the level proposed in the present disclosure. In addition, the added C may affect not only bake hardening (BH) properties but also aging properties, which may increase a BH170 value. Consequently, not only does the BH170-BH140 value increase, but a problem may also arise in which the room temperature anti-aging properties deteriorates. If the fraction of the transformed structure exceeds 1.0 area%, the aging properties may become excellent due to the excessive transformed structure, but a problem may arise in which the BH140 value decreases. Therefore, it is desirable for the fraction of the transformed structure to have a range of 1.0 area% or less (excluding 0%). The lower limit of the transformed structure fraction is more advantageous at 0.010%, even more advantageous at 0.0150%, and most advantageous at 0.020%. The upper limit of the transformed structure fraction is more advantageous at 0.090%, even more advantageous at 0.080%, and most advantageous at 0.070%. Meanwhile, if the average grain size of the transformed structure exceeds 1000 nm, there may be a disadvantage in that the strength increases while the formability decreases. On the other hand, in the present disclosure, the lower limit of the average grain size of the transformed structure is not particularly limited, but, as an example, may be 100 nm.

The cold-rolled steel sheet of the present disclosure provided as described above has a tensile strength of 350 MPa or more, a yield strength of 200 to 300 MPa, an elongation of 30% or more, an amount of bake hardening (BH140) after heat treatment at 140°C for 20 minutes of 30 MPa or more, a difference between the amount of bake hardening (BH170) after heat treatment at 170°C for 20 minutes and the amount of bake hardening (BH140) after heat treatment at 140°C for 20 minutes of 20 MPa or less, and a yield point elongation (AI) after heat treatment at 100°C for 1 hour of 0.2% or less, thereby ensuring excellent low-temperature bake hardenability and room-temperature anti-aging properties. In the present disclosure, since higher values for the tensile strength, elongation, and BH140 are advantageous, their upper limits are not particularly limited; however, as an example, it is difficult for the tensile strength, elongation, and BH140 values to exceed 400 MPa, 40%, and 50 MPa, respectively. Furthermore, in the present disclosure, since lower values for the BH170-BH140 and the yield point elongation after heat treatment at 100°C for 1 hour are advantageous, their lower limits are not particularly limited; as an example, the lower limits for the BH170-BH140 values and the yield point elongation after heat treatment at 100°C for 1 hour may be 0 MPa and 0%, respectively. Meanwhile, the BH value refers to the amount of bake hardening at a specific temperature, which represents a value obtained by measuring an increase in the lower yield strength compared to room temperature after baking at a specific temperature for a certain period of time, based on a flow stress after 2% pre-strain.

In addition, the cold-rolled steel sheet of the present disclosure may have a hot-dip galvanized plating layer or a galvannealed plating layer formed on at least one surface thereof.

Hereinafter, a method of manufacturing a cold-rolled steel sheet according to an embodiment of the present disclosure will be described.

First, a slab satisfying the aforementioned alloy composition is reheated. The reheating operation may be performed to facilitate a subsequent hot rolling operation and to sufficiently obtain target physical properties of the steel sheet. The slab reheating may be performed at 1100 to 1250°C. If the slab reheating temperature is below 1100°C, slab inclusions, etc., may not be sufficiently re-dissolved, which may cause material variation or surface defects after hot rolling. If the slab reheating temperature exceeds 1250°C, strength may decrease due to excessive growth of austenite grains, and excessive scale may be formed, which may degrade the surface quality of the steel sheet. Accordingly, the reheating temperature of the slab may be 1100 to 1250°C. The lower limit of the reheating temperature of the slab is more advantageous at 1110°C, even more advantageous at 1120°C, and most advantageous at 1130°C. The upper limit of the reheating temperature of the slab is more advantageous at 1240°C, even more advantageous at 1230°C, and most advantageous at 1220°C.

Subsequently, the reheated slab is subjected to finish hot rolling to obtain a hot-rolled steel sheet. When the finish hot rolling is performed in an austenite single-phase region, it forms pancake-shaped austenite grains and deformation bands, which may be advantageous in terms of refining the final microstructure. The finish hot rolling may be performed at 880°C or higher. If the finishing hot rolling temperature is less than 880°C, dual-phase rolling of austenite and ferrite may occur, which causes material non-uniformity and potentially leading to an excessive rolling load. Therefore, the finishing hot rolling temperature may be controlled to 880°C or higher so that hot rolling is completed in the austenite single phase. The finishing hot rolling temperature may be more advantageous at 890°C or higher, even more advantageous at 900°C or higher, and most advantageous at 910°C or higher. Meanwhile, in the present disclosure, the upper limit of the finishing hot rolling temperature is not particularly limited. However, as an example, the finishing hot rolling temperature may be 950°C or lower.

Subsequently, the hot-rolled steel sheet is cooled to 500 to 700°C and then coiled. If the coiling temperature is less than 500°C, the shape of the steel sheet may be defective, and a large amount of low-temperature transformed phases, such as martensite or bainite, may be formed, which may lead to an excessive increase in the strength of the steel sheet. If the coiling temperature exceeds 700°C, coarse ferrite grains may be formed, and coarse carbides and nitrides are likely to be formed, which may deteriorate the material properties of the steel. Furthermore, the high coiling temperature may increase hot-rolled sheet oxides, such as Mn and Si, and thus, even if the oxides partially remain or are completely removed during a pickling process, enriched products may be formed on the surface layer portion of the steel sheet, which may cause surface defects during plating. Therefore, the coiling temperature preferably ranges from 500 to 700°C. The lower limit of the coiling temperature is more advantageously at 510°C, even more advantageously at 520°C, and most advantageously at 550°C. The upper limit of the coiling temperature is more advantageously at 690°C, even more advantageously at 680°C, and most advantageously at 670°C.

Subsequently, the coiled hot-rolled steel sheet is pickled and then cold-rolled to obtain a cold-rolled steel sheet. After the coiling, a pickling process for removing surface scale may be additionally performed before the subsequent process of cold rolling. In the present disclosure, the conditions of the pickling process are not specifically limited, and all conditions commonly used in the art may be applied. The cold rolling may be performed with a reduction ratio of 60 to 90%. If the reduction ratio during the cold rolling is less than 60%, recrystallization driving force by cold rolling may be insufficient, so the recrystallization of ferrite may not be completed and a problem may occur in which unrecrystallized ferrite structure remains. If the reduction ratio during the cold rolling exceeds 90%, the rolling roll load may become very severe, which may cause a problem in which the shape of the steel sheet deteriorates. In particular, cracks may occur at the edge portion of the steel sheet, causing a load during cold rolling. Therefore, the reduction ratio during the cold rolling may be 60 to 90%. The lower limit of the reduction ratio during the cold rolling is more advantageous at 65% and even more advantageously at 70%. The upper limit of the reduction ratio during the cold rolling is more advantageous at 85% and even more advantageous at 80%.

Subsequently, the cold-rolled steel sheet is primarily heated at 760 to 830°C. If the primary heating temperature is less than 760°C, recrystallization may not be sufficiently completed, leading to a risk of an unrecrystallized structure. In addition, since this corresponds to annealing in a ferrite single-phase region, there is a problem in that the microstructure intended in the present disclosure cannot be secured. If the primary heating temperature exceeds 830°C, the austenite fraction becomes excessively high, which decreases the stability of the austenite in the dual-phase region. Consequently, reverse transformation into ferrite occurs during cooling, making it difficult to secure the target martensite fraction in the final structure, and thus it may be difficult to expect sufficient bake hardenability and room temperature anti-aging properties. Therefore, it is preferable for the first heating temperature to have a range of 760 to 830°C. The lower limit of the primary heating temperature is more advantageous at 770°C and even more advantageous at 780°C. The upper limit of the primary heating temperature is more advantageous at 820°C and even more advantageous at 810°C. The primary heating may be performed for 30 seconds or more. If the primary heating time is less than 30 seconds, recrystallization and growth may not occur sufficiently, leading to a problem in which the microstructure becomes non-uniform. In the present disclosure, the upper limit of the primary heating time is not particularly limited, but, as an example, may be 50 seconds.

Subsequently, the primarily heated cold-rolled steel sheet is primarily cooled to a cooling stop temperature of 200 to 400°C at an average cooling rate of 20°C/s or higher. The primary cooling is intended to form martensite. If the primary cooling stop temperature is less than 200°C, a large amount of energy may be required to raise the temperature during subsequent reheating, which may result in a disadvantage of reduced productivity. If the primary cooling stop temperature exceeds 400°C, the Ms temperature may not be reached, and the martensite required for the present disclosure may not be formed. Therefore, it is preferable that the primary cooling stop temperature be in the range of 200 to 400°C. The lower limit of the primary cooling stop temperature is more advantageous at 210°C, even more advantageous at 220°C, and most advantageous at 230°C. The upper limit of the primary cooling stop temperature is more advantageous at 390°C, even more advantageous at 380°C, and most advantageous at 370°C. If the primary cooling rate is less than 20°C/s, martensite may not be formed. In the present disclosure, the upper limit of the primary cooling rate is not particularly limited, but as an example, the upper limit may be 100°C/s.

Thereafter, the primarily cooled cold-rolled steel sheet is secondarily heated to 400 to 600°C at a heating rate of 5°C/s or less. If the secondary heating temperature is less than 400°C, there may be a disadvantage in that the temperature for entering a plating bath cannot be secured. If the secondary heating temperature exceeds 600°C, there may be a disadvantage in that the secured martensite phase is tempered during the heat treatment process, resulting in a failure to secure the desired physical properties. Therefore, it is desirable for the secondary heating temperature to have a range of 400 to 600°C. The lower limit of the secondary heating temperature is more advantageous at 410°C, even more advantageous at 420°C, and most advantageous at 430°C. The upper limit of the secondary heating temperature is more advantageous at 590°C, even more advantageous at 580°C, and most advantageous at 570°C. If the secondary heating rate exceeds 5°C/s, there may be a disadvantage in that sufficient heat is not achieved. In the present disclosure, the lower limit of the secondary heating rate is not particularly limited, but as an example, the lower limit may be 3°C/s.

After the secondary heating process, temper rolling the secondarily heated cold-rolled steel sheet with a reduction ratio of 0.5 to 2% using a skin pass roll having a surface roughness Ra of 1.0 to 2.2 µm may be additionally included. If the surface roughness Ra of the skin pass roll is less than 1.0 µm, there may be a disadvantage in that the surface roughness Ra of a final product is lowered, thereby reducing press formability. If the surface roughness Ra of the skin pass roll exceeds 2.2 µm, there may be a disadvantage in that the formability of the product surface is reduced. Therefore, the surface roughness Ra of the skin pass roll may be 1.0 to 2.2 µm. The lower limit of the surface roughness Ra of the skin pass roll is more advantageous at 1.1 µm, even more advantageous at 1.2 µm, and most advantageous at 1.3 µm. The upper limit of the surface roughness Ra of the skin pass roll is more advantageous at 2.1µm, even more advantageous at 2.0µm, and most advantageous at 1.9µm. If the reduction ratio during the temper rolling is less than 0.5%, sufficient dislocations may not be formed, it may be disadvantageous in terms of plate shape, and there may be a risk of surface defects occurring during plating. In addition, it may be disadvantageous in terms of anti-aging properties. If the reduction ratio during the temper rolling exceeds 2%, there may be a possibility that material deterioration occurs due to an excessive increase in dislocation density in the surface layer portion and side effects, such as plate breakage, may be caused due to the limitations of equipment capacity. Therefore, the reduction ratio during the temper rolling may be 0.5 to 2%. The lower limit of the reduction ratio during the temper rolling is more advantageous at 0.6%, even more advantageous at 0.7%, and most advantageous at 0.8%. The upper limit of the reduction ratio during the temper rolling is more advantageous at 1.9%, even more advantageous at 1.8%, and most advantageous at 1.7%.

Meanwhile, after the secondary heating process or temper rolling process, a plating process may be performed according to the required purpose.

That is, the secondarily heated cold-rolled steel sheet may be immersed in a zinc plating bath. In the present disclosure, the temperature of the zinc plating bath is not particularly limited, and a temperature range commonly used in the art may be applied. As an example, the temperature of the zinc plating bath may have a range of 440 to 500°C.

In addition, after immersion in the zinc plating bath, temper rolling the cold-rolled steel sheet with a reduction ratio of 0.5 to 2% using a skin pass roll having a surface roughness Ra of 1.0 to 2.2 µm may be additionally included. Meanwhile, as an example, the temper rolling process may be performed when temper rolling is not performed after the secondary heating process.

Subsequently, alloying the cold-rolled steel sheet may be additionally included. In the present disclosure, the alloying treatment temperature is not particularly limited, and a temperature range commonly used in the art may be applied. As an example, the alloying treatment temperature may have a range of 450 to 540°C.

### Mode for Invention

The present disclosure will be explained more specifically through the following examples. However, it should be noted that the following examples are intended only to illustrate and explain the present disclosure in more detail, and are not intended to limit the scope of the rights of the present disclosure.

### (Example)

Slabs having the alloy compositions described in Table 1 below were reheated, finished hot-rolled, coiled, and cold-rolled under the conditions described in Table 2 below. Subsequently, primary heating, primary cooling, and secondary heating were performed under the conditions described in Table 2 below. Thereafter, after furnace cooling, hot-dip galvanizing was performed by immersion in a hot-dip galvanizing bath at 460°C, and then temper rolling was performed at a reduction ratio of 1.2% using a skin pass roll having a surface roughness Ra of 2.0 µm. Meanwhile, for Comparative Examples 1 and 2, furnace cooling was performed after primary heating.

The microstructures and mechanical properties of the steel sheets prepared in this manner were measured, and the results are shown in Table 3 below.

The microstructures were measured using an optical microscope at a 1/4 thickness point of the steel sheet after Le Pera etching.

Among the mechanical properties, tensile strength, yield strength, and elongation were measured by conducting tensile tests using ASTM-L standards.

Regarding the amount of bake hardening among the mechanical properties, an increase in lower yield strength relative to room temperature was measured for specimens of the same specifications used in the tensile test after heat treatment at 140°C and 170°C for 20 minutes following 2% pre-strain.

Among the mechanical properties, yield point elongation (AI), which represents room temperature anti-aging properties, was measured by performing a tensile test on the specimens after heat treatment at 100°C for 1 hour.

**[Table 1]**

| Steel | Alloy composition (wt%) | | | | | | | |
|---|---|---|---|---|---|---|---|---|
| gradSteele No. | C | Si | Mn | P | S | Al | Cr | N |
| 1 | 0.019 | 0.018 | 1.0 | 0.013 | 0.002 | 0.030 | 0.49 | 0.002 |
| 2 | 0.015 | 0.011 | 1.2 | 0.012 | 0.002 | 0.022 | 0.49 | 0.003 |
| 3 | 0.020 | 0.007 | 0.8 | 0.016 | 0.003 | 0.027 | 0.5 | 0.005 |
| 4 | 0.032 | 0.017 | 1.0 | 0.015 | 0.002 | 0.029 | 0.4 | 0.003 |
| 5 | 0.006 | 0.012 | 2.2 | 0.012 | 0.002 | 0.025 | 1.2 | 0.005 |
| 6 | 0.016 | 0.011 | 0.8 | 0.013 | 0.003 | 0.021 | 1.7 | 0.007 |

**[Table 2]**

| Classification | Steel grade No. | Reheating temperature (°C) | Finishing hot rolling temperature (°C) | Coiling temperature (°C) | Cold rolling reduction rati ° (%) | Primary heating temperature (°C) | Primary heating time (s) | Primary cooling rate (°C/ s) | Primary cooling stop temperature (°C) | Secondary heating rate (°C/ s) | Secondary heating temperature (°C) |
|---|---|---|---|---|---|---|---|---|---|---|---|
| Inventive Example 1 | 1 | 1200 | 910 | 650 | 70 | 810 | 35 | 22 | 300 | 4.0 | 460 |
| Inven tive Examp le 2 | 1 | 1200 | 910 | 650 | 70 | 780 | 41 | 21 | 350 | 4.5 | 450 |
| Inventive Example 3 | 2 | 1200 | 900 | 650 | 70 | 810 | 34 | 25 | 315 | 4.0 | 455 |
| Comparative Examp le 1 | 2 | 1200 | 900 | 650 | 70 | 870 | 33 | 25 | - | - | - |
| Inven tive Example 4 | 3 | 1180 | 910 | 650 | 70 | 800 | 40 | 22 | 305 | 4.1 | 466 |
| Inventive Example 5 | 3 | 1190 | 910 | 550 | 70 | 790 | 35 | 26 | 305 | 4.0 | 461 |
| Comparative Example 2 | 3 | 1180 | 920 | 550 | 70 | 810 | 31 | 24 | - | - | - |
| Comparative Example 3 | 4 | 1180 | 920 | 550 | 70 | 810 | 35 | 25 | 315 | 4.2 | 466 |
| Comparative Example 4 | 5 | 1180 | 920 | 550 | 70 | 810 | 39 | 24 | 302 | 3.8 | 455 |
| Comparative Example 5 | 6 | 1180 | 920 | 550 | 70 | 810 | 37 | 28 | 310 | 4.0 | 465 |

**[Table 3]**

| Classification | Microstructure | | | Yield strength (MPa) | Tensile strength (MPa) | Elongation (%) | BH140 (MPa) | BH170 - BH140 (MPa) | AI (%) |
|---|---|---|---|---|---|---|---|---|---|
| | Transformed microstructure fraction (area %) | Average grain size of transformed microstructures (nm) | Ferrite | | | | | | |
| Inventive Example 1 | 0.23 | 300 | Remainder | 262 | 386 | 35 | 31 | 4 | 0 |
| Inventive Example 2 | 0.12 | 500 | Remainder | 239 | 391 | 34 | 39 | 1 | 0 |
| Inventive Example 3 | 0.28 | 250 | Remainder | 257 | 385 | 38 | 38 | 14 | 0.1 |
| Comparative Example 1 | 0 | 0 | Remainder | 279 | 398 | 33 | 12 | 26 | 0 |
| Inventive Example 4 | 0.60 | 550 | Remainder | 220 | 390 | 38 | 34 | 9 | 0 |
| Inventive Example 5 | 0.53 | 350 | Remainder | 247 | 388 | 34 | 35 | 6 | 0 |
| Comparative Example 2 | 0 | 0 | Remainder | 213 | 379 | 35 | 22 | 8 | 0 |
| Comparative Example 3 | 1.0 | 450 | Remainder | 312 | 415 | 27 | 32 | 16 | 0 |
| Comparative Example 4 | 0.05 | 1100 | Remainder | 268 | 390 | 33 | 21 | 24 | 0.3 |
| Comparative Example 5 | 0.68 | 800 | Remainder | 298 | 420 | 15 | 35 | 30 | 0 |
| Transformed microstructure: one or more of martensite, bainite, and ferritic bainite | | | | | | | | | |
| BH140: Amount of bake hardening after heat treatment at 140°C for 20 minutes | | | | | | | | | |
| BH170: Amount of bake hardening after heat treatment at 170°C for 20 minutes | | | | | | | | | |

As can be seen from Tables 1 to 3 above, Inventive Examples 1 to 5, which satisfy the alloy composition and manufacturing conditions of the present disclosure, demonstrate that excellent mechanical properties are secured by obtaining the microstructure targeted by the present disclosure.

In the case of Comparative Example 1, which did not satisfy the primary heating temperature and did not perform primary cooling and secondary heating, it can be seen that the BH140 is low and the BH170-BH140 is high because the microstructure targeted by the present disclosure was not secured.

In the case of Comparative Example 2, which did not perform primary cooling and secondary heating, it can be seen that the BH140 is low because the microstructure targeted by the present disclosure was not secured.

In the case of Comparative Example 3, which does not satisfy the content of C, it can be seen that the yield strength is high and the elongation is low.

In the case of Comparative Example 4, which does not satisfy the C content and Mn content, it can be seen that the microstructure targeted by the present disclosure is not secured, resulting in a low BH140 level and high levels of BH170-BH140 and AI.

In the case of Comparative Example 5, which does not satisfy the Cr content, it can be seen that the elongation is low and BH170-BH140 are high.

## Claims

1. A cold rolled steel sheet comprising:
by wt%, 0.010 to 0.020% of C, 0.0050 to 0.10% of Si, 0.50 to 1.450% of Mn, 0.30 to 1.50% of Cr, 0.030% or less (excluding 0%) of P, 0.010% or less (excluding 0%) of S, 0.0020 to 0.010% of N, 0.010 to 0.040% of Al, and a remainder of Fe and unavoidable impurities,
wherein a microstructure includes columnar ferrite and a remainder of a transformed structure,
the transformed structure includes at least one of martensite, bainite, and ferritic bainite, and
the transformed structure has an area% of 1.0% or less (excluding 0%) and an average grain size of 1000 nm or less.

2. The cold rolled steel sheet of claim 1, wherein the cold-rolled steel sheet has a tensile strength of 350 MPa or more, a yield strength of 200 to 300 MPa, an elongation of 30% or more, an amount of bake hardening after heat treatment at 140°C for 20 minutes of 30 MPa or more, a difference between the amount of bake hardening after heat treatment at 140°C for 20 minutes and an amount of bake hardening after heat treatment at 170°C for 20 minutes of 20 MPa or less, and a yield point elongation (AI) of 0.2% or less after heat treatment at 100°C for 1 hour.

3. The cold rolled steel sheet of claim 1, wherein the cold-rolled steel sheet has a hot-dip galvanized plating layer or a galvannealed plating layer formed on at least one surface thereof.

4. A method of manufacturing a cold rolled steel sheet, the method comprising:
reheating a slab comprising, by wt%, 0.010 to 0.020% of C, 0.0050 to 0.10% of Si, 0.50 to 1.450% of Mn, 0.30 to 1.50% of Cr, 0.030% or less (excluding 0%) of P, 0.010% or less (excluding 0%) of S, 0.0020 to 0.010% of N, 0.010 to 0.040% of Al, and a remainder of Fe and unavoidable impurities;
finishing hot rolling the reheated slab to obtain a hot-rolled steel sheet;
cooling the hot-rolled steel sheet to 500 to 700°C and then coiling the hot-rolled steel sheet;
pickling the coiled hot-rolled steel sheet and then cold rolling the picked hot-rolled steel sheet to obtain a cold-rolled steel sheet;
primarily heating the cold-rolled steel sheet to 760 to 830°C;
primarily cooling the primarily heated cold-rolled steel sheet to a cooling stop temperature of 200 to 400°C at an average cooling rate of 20°C/s or more; and
secondarily heating the primarily cooled cold-rolled steel sheet to 400 to 600°C at a heating rate of 5°C/s or less.

5. The method of claim 4, wherein the slab reheating is performed at 1100 to 1250°C.

6. The method of claim 4, wherein the finishing hot rolling is performed at 880°C or higher.

7. The method of claim 4, wherein the cold rolling is performed with a reduction ratio of 60 to 90%.

8. The method of claim 4, wherein the primary heating is performed for 30 seconds or more.

9. The method of claim 4, further comprising temper rolling the secondarily heated cold-rolled steel sheet at a reduction ratio of 0.5 to 2% using a skin pass roll having a surface roughness Ra of 1.0 to 2.2 µm.

10. The method of claim 4, further comprising, after the secondary heating, immersing the secondarily heated cold-rolled steel sheet in a zinc plating bath at 440 to 500°C.

11. The method of claim 9, further comprising, after immersion in the zinc plating bath, temper rolling the cold-rolled steel sheet using a skin pass roll having a roughness Ra of 1.0 to 2.2 µm at a reduction ratio of 0.5 to 2%.

12. The method of claim 10 or 11, further comprising alloying the cold-rolled steel sheet at 450 to 540°C.
